# EUROPÄISCHE PATENTSCHRIFT

(11) **EP 3 514 429 B1**
(45) Veröffentlichungstag und Bekanntmachung des Hinweises auf die Patenterteilung: **20.05.2020**
(21) Anmeldenummer: 19153101.1
(22) Anmeldetag: 22.01.2019
(51) Int. Cl.: F16L 3/133, F16L 3/20, F16L 3/24

(54) **VERBINDUNGSELEMENT**
CONNECTING ELEMENT
ÉLÉMENT DE RACCORDEMENT

(30) Priorität: 22.01.2018 DE 102018101346
(43) Veröffentlichungstag der Anmeldung: 24.07.2019
(73) Patentinhaber: Sikla Holding GmbH, 4614 Marchtrenk (AT)
(72) Erfinder: Menz, Peter, 78661 Dietingen (DE); Braack, Ellen, 78549 Spaichingen (DE)
(74) Vertreter: Mertzlufft-Paufler, Cornelius

(56) Entgegenhaltungen:
- WO-A1-2017/106637
- US-A1- 2006 024 127
- US-B1- 6 415 560

## Beschreibung

Die Erfindung betrifft ein Verbindungselement zum gelenkigen Verbinden von zumindest einer Montageschiene mit einem Bauteil oder -werk, insbesondere von zwei Montageschienen, das als Scharnier mit zwei Scharnierflügeln ausgebildet ist, die schwenkbar miteinander verbunden sind, und die jeweils wenigstens eine Befestigungsöffnung zum Verbinden mit einer Schraube, einem Gewindestab oder dergleichen Befestigungsmittel aufweisen, wobei zumindest ein erster Scharnierflügel wenigstens einer als randseitig offenes Langloch ausgebildete Befestigungsöffnung hat, wobei zumindest der erste Scharnierflügel des Scharniers doppellagig ausgestaltet und aus zwei, durch eine Umbiegung miteinander verbundene Materiallagen eines Materialstreifens gebildet ist, und wobei die wenigstens eine als Langloch ausgebildete Befestigungsöffnung des ersten Scharnierflügels durch miteinander fluchtende, randseitig offene Langlöcher in den den zumindest einen ersten Scharnierflügel bildenden Materiallagen gebildet ist.

Um in der Gebäudetechnik oder im Anlagenbau Rohrleitungen zu verlegen, werden Rohrschellen verwendet, die regelmäßig über Gewindestäbe an deckenseitig befestigten Montageschienen abgehängt sind. Im Falle von Erdbeben oder anderen Erschütterungen können sich solche Abhängungen derart aufschaukeln, dass sie abstürzen und die an ihnen befestigten Rohrleitungen eventuell bersten. Insbesondere in Erdbebengebieten stellt sich daher häufig die Aufgabe, die Abhängungen solcher Rohrleitungen auch nachträglich noch erdbebensicher auszugestalten und beispielsweise durch weitere Querstreben noch zusätzlich abzusichern.

Man hat daher sogenannte Retrofit-Gelenke geschaffen, mit denen auch nachträglich eine Montageschiene mit weiteren Montageschienen gelenkig verbunden werden kann, die anschließend beispielsweise als Querstreben dienen. So ist aus der WO 2017/106637 A1 ein Verbindungselement vorbekannt, das zum gelenkigen Verbinden von zwei Montageschienen dient und als sogenanntes gerolltes Scharnier mit zwei Scharnierflügeln ausgebildet ist. Die als laschenförmige Material- oder Blechstreifen ausgebildeten Scharnierflügel sind über einen Stift miteinander verbunden, der die Schwenkachse des Scharniers bildet. Jedes der beiden Scharnierflügel des Scharniers weist wenigstens eine Befestigungsöffnung auf, so dass der eine Scharnierflügel des Scharniers mit der einen Montageschiene verbunden werden kann, während der andere Scharnierflügel des Scharniers an der anderen Montageschiene gehalten ist. Damit das als Retrofit-Gelenk dienende vorbekannte Scharnier auch nachträglich noch auf den Gewindestab aufgeschoben werden kann, mit dem die eine der Montageschienen von der Decke abgehängt ist, ist zumindest die in einem ersten Scharnierflügel des Scharniers vorgesehene Befestigungsöffnung als randseitig offenes Langloch ausgebildet. Zwischen diesem ersten Scharnierflügel des Scharniers und der dem ersten Scharnierflügel zugeordneten Montageschiene ist eine Sicherungsplatte unterlegt, die mit einer komplementären Ausformung die Lochöffnung des im ersten Scharnierflügel vorgesehenen Langloches verschließt und damit den das Langloch durchsetzenden Gewindestab im Bereich des geschlossenen Lochendes sichert. Dabei sind vier voneinander beabstandete und in einem langgezogenen Rechteck zueinander angeordnete Durchtrittsöffnungen vorgesehen, die den ersten Scharnierflügel des Scharniers durchsetzen. In diese Durchtrittsöffnungen stehen noppen- oder höckerförmige Ausformungen vor, die flachseitig an die dem ersten Scharnierflügel des Scharniers zugeordnete Sicherungsplatte angeformt sind und diese Sicherungsplatte in seiner Lage am ersten Scharnierflügel des Scharniers halten. Da das vorbekannte Verbindungselement mehrteilig ausgebildet ist und die komplex ausgestaltete Sicherungsplatte benötigt, ist die Herstellung des vorbekannten Verbindungselements aufwendig und dessen Handhabung beschwerlich.

Aus der US 7 654 043 B2 ist bereits ein Verbindungselement der eingangs erwähnten Art vorbekannt, das zum gelenkigen Verbinden von zumindest einer Montageschiene mit einem Bauteil, insbesondere von zwei Montageschienen, dient. Das vorbekannte Verbindungselement ist als Scharnier mit zwei Scharnierflügeln ausgebildet, die schwenkbar miteinander verbunden sind, und die jeweils wenigstens eine Befestigungsöffnung zum Verbinden mit einer Schraube, einem Gewindestab oder dergleichen Befestigungsmittel aufweisen. Zumindest ein erster Scharnierflügel des als Scharnier ausgebildeten vorbekannten Verbindungselements ist doppellagig ausgestaltet und aus zwei, durch eine Umbiegung miteinander verbundene Materiallagen eines Materialstreifens gebildet. Wenigstens eine als Langloch ausgebildete Befestigungsöffnung des ersten Scharnierflügels ist durch miteinander fluchtende, randseitig offene Langlöcher in den den zumindest einen ersten Scharnierflügel formenden Materiallagen gebildet. Dabei weist das auf der Innenseite des Scharniers angeordnete Langloch im Bereich seines geschlossenen Lochendes eine kreisrunde Einprägung auf, in welche die auf den Gewindestab aufgeschraubte Schraube oder der Schraubenkopf eintauchen kann. Um seismisch verursachte Schwingungen oder Stöße sicher ins Bauwerk ableiten zu können, sind hohe Vorspannkräfte und Anzugsmomente an der Schraubverbindung im Bereich des Gewindestabes notwendig, um ein Gleiten des Verbindungselements zu verhindern. Da diese Vorspannkräfte bei dem aus der US 7 654 043 B2 vorbekannten Verbindungselement augenscheinlich nicht erreicht werden, ist dort das in dem ersten Scharnierflügel vorgesehene Langloch orthogonal zur Krafteinleitung angeordnet. Dabei dient die auf der Innenseite des Scharniers angeordnete und im Bereich des geschlossenen Lochendes vorgesehene kreisrunde Einprägung nur als Montagehilfe und nicht zur Kraftableitung. Bei der Montage ist die Ausrichtung des Langloches orthogonal zur Krafteinleitung insbesondere in beengten Platzverhältnissen nur schwer möglich. Da die den ersten Scharnierflügel bildenden Materiallagen bei dem aus US 7 654 043 B2 vorbekannten Verbindungselement durch einen dazwischenliegenden Freiraum voneinander beabstandet sind, ist es im Falle eines Erdbebens möglich, dass die innenliegende Materiallage des ersten Scharnierflügels durch seismische Schwingungen oder Stöße in diesen Freiraum verformt wird, womit die mit Hilfe des vorbekannten Verbindungselements angestrebte Verbindung ihre Vorspannung verliert und die Mutter oder der Schraubenkopf aus der kreisrunden Einprägung mit der Folge rutschen kann, dass sich die mit Hilfe des vorbekannten Verbindungselements angestrebte Gelenkverbindung löst.

Aus der US 6 415 560 B1 ist ein Verbindungswinkel vorbekannt, der aus einem Blechstreifen hergestellt wird, welcher etwa mittig abgewinkelt ist. Dieser Verbindungswinkel, der als seismische Klammer für eine Tragstange vorgesehen ist, um eine Bewegung dieser Tragstange während einer seismischen Aktivität zu verhindern, weist einen ersten Winkelabschnitt und einen zweiten Winkelabschnitt auf, die im Bereich einer abgewinkelten Biegung des verwendeten Blechstreifens abgewinkelt sind. Von diesen Winkelabschnitten ist der erste Winkelabschnitt doppellagig ausgebildet. In dem doppellagigen ersten Winkelabschnitt ist ein zum schmalseitigen Winkelabschnitt-Ende hin offenes Langloch vorgesehen, das durch formidentische und miteinander fluchtende Langlöcher in den einzelnen Materiallagen dieses Winkelabschnitts gebildet ist. Durch einen zwischen diesen Materiallagen einschiebbaren weiteren Blechstreifen, der ein demgegenüber im rechten Winkel angeordnetes Langloch trägt, lässt sich eine Schraube oder einen Gewindestab am vorbekannten Verbindungswinkel sichern. Eine gelenkige Verbindung der zu verbindenden Bauteile ist mit Hilfe des vorbekannten Verbindungswinkels nicht möglich.

Es besteht daher insbesondere die Aufgabe, ein Verbindungselement der eingangs erwähnten Art zu schaffen, das mit geringem Aufwand herstellbar und einfach in der Handhabung ist.

Die erfindungsgemäße Lösung dieser Aufgabe besteht bei dem Verbindungselement der eingangs erwähnten Art insbesondere darin, dass die auf der Innenseite des Scharniers angeordnete Materiallage des zumindest einen ersten Scharnierflügels ein schlüssellochförmiges Langloch trägt, dass der das Langloch in der außenliegenden Materiallage im Bereich des Lochendes umgrenzende Umfangsrandbereich über den eine kreissegmentförmige Erweiterung in der innenliegenden Materiallage des ersten Scharnierflügels umgrenzenden Umfangsrandbereich vorsteht und eine Auflage für eine auf den Gewindestab aufgeschraubte Schraubenmutter oder einen Schraubenkopf der Schraube bildet, und dass die in den Materiallagen des ersten Scharnierflügels vorgesehenen, miteinander fluchtenden Langlöcher zu dem durch die Umbiegung gebildeten Rand des ersten Scharnierflügels hin offen ausgebildet sind.

Das erfindungsgemäße Verbindungselement ist zum gelenkigen Verbinden von zumindest einer Montageschiene mit einem Bauteil oder einem Bauwerk, insbesondere zum gelenkigen Verbinden von zwei Montageschienen miteinander, vorgesehen. Das erfindungsgemäße Verbindungselement ist dazu als Scharnier ausgebildet, das zwei Scharnierflügel hat, die über eine Schwenkachse schwenkbar miteinander verbunden sind. Jeder dieser Scharnierflügel weist zumindest eine Befestigungsöffnung zum Verbinden mit einer Schraube, einem Gewindestab oder dergleichen Befestigungsmittel auf. Dabei ist die zumindest eine Befestigungsöffnung an wenigstens einem ersten Scharnierflügel als Langloch ausgebildet, das zu dem durch eine Umbiegung gebildeten Rand des ersten Scharnierflügels hin offen ausgebildet ist. Mit Hilfe dieses randseitig offenen Langloches kann der erste Scharnierflügel des Scharniers beispielsweise auf einen Gewindestab aufgeschoben werden, mit dem eine erste Montageschiene von der Decke abgehängt ist, während der zweite Scharnierflügel des Scharniers mit einer weiteren zweiten Montageschiene verbunden werden kann, die zur Sicherung der ersten Montageschiene als Sicherungs- oder Querstrebe dient. Der zumindest eine erste Scharnierflügel des Scharniers ist zumindest in dem laschenförmigen Teilbereich dieses Scharnierflügels doppellagig ausgebildet und dazu aus zwei, durch die Umbiegung miteinander verbundene Materiallagen eines Material- oder Blechstreifens gebildet. Dabei wird das im ersten Scharnierflügel als Befestigungsöffnung vorgesehene Langloch durch miteinander fluchtende, randseitig offene Langlöcher in den den zumindest einen ersten Scharnierflügel bildenden Materiallagen gebildet. Von diesen miteinander fluchtenden Langlöchern ist das in der an der Innenseite des Scharniers gelegenen Materiallage des ersten Scharnierflügels vorgesehene Langloch schlüssellochförmig ausgebildet, während der das Langloch in der außenliegenden Materiallage im Bereich des Lochendes umgrenzende Umfangsrandbereich über den eine kreissegmentförmige Erweiterung des in der innenliegenden Materiallage des ersten Scharnierflügels bildenden und das schlüssellochförmige Langloch umgrenzenden Umfangsrandbereich vorsteht und eine Auflage für eine auf den Gewindestab aufgeschraubte Schraubenmutter oder einen Schraubenkopf der Schraube bildet. In dem als kreissegmentförmige Erweiterung des schlüssellochförmigen Langloches vorgesehene Teilbereich kann beispielsweise eine Schraubenmutter gesichert versenkt werden, die auf dem Gewindestab aufgeschraubt ist, der das an dem zumindest einen ersten Scharnierflügel des Scharniers vorgesehene Langloch durchsetzt. Da das erfindungsgemäße Verbindungselement einstückig ausgebildet ist und keine zusätzliche, komplex ausgebildete Sicherungsplatte benötigt, ist das erfindungsgemäße Verbindungselement mit geringem Aufwand herstellbar und einfach in der Handhabung und Montage.

Da der das Langloch in der außenliegenden Materiallage im Bereich des Lochendes umgrenzende Umfangsrandbereich über die kreissegmentförmige Erweiterung des in der innenliegenden Materiallage vorgesehenen schlüssellochförmigen Langloches vorsteht, kann dieser vorstehende Umfangsrandbereich als Auflage für eine auf den Gewindestab aufgeschraubte Schraubenmutter oder einen Schraubenkopf der Schraube bilden. Die Auflage dieser Schraubenmutter oder dieses Schraubenkopfes wird somit auf dem Vollmaterial der außenliegenden Materiallage erreicht. Diese harte Schraubverbindung kann die Vorspannkraft sicher aufnehmen. Zudem erzeugt der durch die kreissegmentförmige Erweiterung des in der innenliegenden Materiallage vorgesehenen schlüssellochförmigen Langloches einen Formschluss, der die sichere Aufnahme der Schraubenmutter oder des Schraubenkopfes auch während seismischer Schwingungen oder Stöße in Strebenrichtung erlaubt. Für die Adaption von Streben ist regelmäßig ein ausreichender Einbauraum in Strebenrichtung gegeben, weil ansonsten eine Strebenmontage nicht möglich wäre. Da bei dem erfindungsgemäßen Verbindungselement das im ersten Scharnierflügel vorgesehene Langloch zu dem durch die Umbiegung gebildeten Rand des ersten Scharnierflügels hin offen ausgebildet ist, und da somit das in dem zumindest einen ersten Scharnierflügel vorgesehene Langloch in Längsrichtung des Verbindungselements orientiert ist, ist das im ersten Scharnierflügel vorgesehene Langloch stets in Kraftrichtung der Streben ausgerichtet und eine störkantenfreie Montage wird ermöglicht. Da die Schraubenmutter oder der Schraubenkopf die innenliegende Materiallage des ersten Scharnierflügels im Bereich der kreissegmentförmigen Erweiterung durchsetzen kann, und da diese Schraubenmutter oder der Schraubenkopf auf dem Vollmaterial der außenliegenden Materiallage aufliegt, wird stets eine feste Auflage und eine Fixierung der Schraubenmutter oder des Schraubenkopfes im schlüsselförmigen Langloch der ersten Materiallage erreicht. Da die Schraubenmutter oder der Schraubenkopf die innenliegende Materiallage im Bereich der kreissegmentförmigen Erweiterung durchsetzt, wird ein deutlich stärker definierter Hinterschnitt ermöglicht und die innenliegende sowie die außenliegende Materiallage des zumindest einen ersten Scharnierflügels können flächig aneinander anliegen. Zwar kann bei seismischen Schwingungen oder Stößen die innenliegende Materiallage etwas aufbiegen, jedoch mit der Folge, dass sich die Engstelle im Bereich der schlüssellochförmigen Erweiterung vertikal zur Mutter oder zum Schraubenkopf stellt und sich so der Gewindestab oder die Mutter im Bereich der Engstelle zwischen dem Langloch und der schlüssellochförmigen Erweiterung verspannt.

Um die beiden Scharnierflügel des erfindungsgemäßen Verbindungselements schwenkbar miteinander verbinden zu können, kann die erforderliche Schwenkachse durch eine Kugel-Pfannen-Gelenkverbindung gebildet sein. Eine besonders einfach herstellbare und deshalb bevorzugte Ausführungsform gemäß der Erfindung sieht demgegenüber vor, dass das Verbindungselement als gerolltes Scharnier ausgebildet ist und/oder das die Scharnierflügel des Verbindungselements über einen Stift schwenkbar miteinander verbunden sind. Insbesondere ein als gerolltes Scharnier ausgebildetes Verbindungselement lässt sich besonders einfach herstellen. Weist dieses Verbindungselement einen Stift als Schwenkachse zwischen seinen Scharnierflügeln auf, ist das erfindungsgemäße Verbindungselement besonders einfach herstellbar und dennoch hoch belastbar.

Um eine Schraubenmutter, die auf einen als Abhängung dienenden Gewindestab aufgeschraubt ist, im schlüssellochförmigen Langloch der innenliegenden Materiallage des ersten Scharnierflügels möglichst tief versenken zu können, ist es vorteilhaft, wenn das schlüssellochförmige Langloch in der auf der Innenseite des Scharniers angeordneten Materiallage des zumindest einen ersten Scharnierflügels an seinem geschlossenen Lochende eine kreissegmentförmige Erweiterung des Lochquerschnitts aufweist.

Der zur Abhängung einer Montageschiene bestimmte Gewindestab lässt sich mit geringem Aufwand auch nachträglich noch in das im zumindest einen ersten Scharnierflügel des Scharniers vorgesehene Langloch einschieben, wenn die in den Materiallagen des ersten Scharnierflügels vorgesehenen Langlöcher parallel orientierte Lochseiten haben, deren Abstand größer ist, als der Gewinde-Nenndurchmesser einer in diese Länglöcher einschiebbaren Schraube oder eines Gewindestabes.

Eine beispielsweise auf den Gewindestab aufgeschraubte Schraubenmutter lässt sich besonders gut und sicher in dem in der innenseitigen Materiallage des zumindest einen ersten Scharnierflügels angeordneten schlüssellochförmigen Langloch versenken, wenn die kreissegmentförmige Erweiterung dieses Langloches einen Durchmesser hat, der größer ist als das Eckenmaß eines Schraubenkopfes der Schraube oder einer auf dem Gewindestab aufgeschrauben Schraubenmutter.

Dabei wird eine Ausführungsform gemäß der Erfindung bevorzugt, bei der die auf der Außenseite des Scharniers angeordnete Materiallage des zumindest einen ersten Scharnierflügels ein Langloch aufweist, dessen parallel zueinander orientierten Lochseiten an einem geschlossenen Lochende durch einen Halbkreis abgeschlossen sind, dessen Durchmesser dem Abstand der parallelen Lochseiten entspricht.

Bei dieser bevorzugten Ausführungsform steht der das Langloch in der auf der Außenseite des Scharniers angeordneten Materiallage im Bereich des Lochendes umgrenzende Umfangsrandbereich über den die kreissegmentförmige Erweiterung umgrenzenden Umfangsrandbereich in der auf der Innenseite des Scharniers vorgesehenen Materiallage des zumindest einen ersten Scharnierflügels vor, so dass dieser vorstehende Randbereich als Auflage für den Schraubenkopf der Schraube oder die auf den Gewindestab aufgeschraubte Schraubenmutter ausgebildet sein kann.

Eine einfache Handhabung des erfindungsgemäßen Verbindungselements wird noch zusätzlich begünstigt, wenn die die Materiallagen miteinander verbindende Umbiegung an dem der Schwenkachse abgewandten Rand des ersten Scharnierflügels angeordnet ist.

Die einfache Handhabung und leichte Montage des erfindungsgemäßen Verbindungselements wird noch zusätzlich begünstigt, wenn das im ersten Scharnierflügel vorgesehene Langloch und die dazu in dessen Materiallagen vorgesehenen miteinander fluchtenden Langlöcher zu dem durch die Umbiegung gebildeten Rand des ersten Scharnierflügels hin offen ausgebildet sind.

Eine gleichmäßige Belastbarkeit und eine hohe Stabilität des erfindungsgemäßen Verbindungselements wird begünstigt, wenn der das Lochende des in der außenliegenden Materiallage vorgesehenen Langloches bildende Halbkreis und die kreissegmentförmige Erweiterung des in der innenliegenden Materiallage des zumindest einen ersten Scharnierflügels vorgesehenen Langloches konzentrisch zueinander angeordnet sind.

Eine weitere vorteilhafte Ausführungsform gemäß der Erfindung, welche die Lösung der oben stehenden Aufgabe noch zusätzlich begünstigt, sieht vor, dass der zumindest eine erste Scharnierflügel vier voneinander beabstandete und im Rechteck zueinander angeordnete Lochöffnungen trägt, die zur Innenseite des Scharniers hin offen ausgebildet sind, dass die Lochöffnungen in einem Quadrat zueinander angeordnet sind und jeweils mit einer Halteausformung fluchten, welche Halteausformungen auf der Außenseite des Scharniers gelegenen Flachseite des zumindest einen ersten Scharnierflügels angeordnet sind, dass der Abstand der Halteausformungen so bemessen ist, dass diese Halteausformungen an den eine vom zumindest einen ersten Scharnierflügel flachseitig beaufschlagten Schienenlängsseite begrenzenden Schienenlängsrändern einer Montageschiene jeweils paarweise anliegen und dass die Halteausformungen in ihrem Querschnitt so bemessen sind, dass sie in die Lochöffnungen eines an dem ersten Scharnierflügel des ersten Verbindungselements anliegenden und um 90 Grad oder 180 Grad gedrehten baugleichen zweiten Verbindungselements eintauchen. Die an der Außenseite des zumindest einen ersten Scharnierflügels vorgesehenen Halterausformungen erleichtern die lagegerechte Positionierung des Verbindungselements auf der zusätzlich abzustützenden Montageschiene. Diese Halteausformungen sind so gestaltet, dass sie eine spielfreie Verdrehsicherung für das auf einer Montageschiene aufliegende Verbindungselement gewährleisten und trotzdem eine ebene Auflage dieses Verbindungselements sowohl auf dem Schienenschlitz als auch auf der Schienenrückenseite zulassen. Um diese Montageschiene bei Bedarf auch durch mehrere, als Querstreben dienende Montageschienen abstützen zu können, können zumindest zwei erfindungsgemäße Verbindungselemente paketweise mit ihren ersten Scharnierflügeln übereinander gelegt werden, wobei die mit ihren ersten Scharnierflügeln übereinander liegenden Verbindungselemente jeweils um 90 Grad oder 180 Grad zueinander gedreht sind. Da die an der außenliegenden Materiallage des ersten Scharnierflügels vorstehenden noppen- oder höckerförmigen Halteausformungen in einem Quadrat zueinander angeordnet sind, können diese Halteausformungen des einen Verbindungselementes in die formangepassten Lochöffnungen am benachbarten ersten Scharnierflügel des anderen Verbindungselementes eingreifen. Auf diese Weise wird eine exakte Stapelbarkeit der bei Bedarf auch übereinandergestapelten Verbindungselemente und eine Verdrehsicherung zwischen diesen übereinandergestapelten Verbindungselementen gewährleistet und die um 90 Grad oder 180 Grad gedrehte Anordnung paketweise übereinander gestapelter benachbarter Verbindungselemente ist gesichert.

Die in der innenliegenden Materiallage des ersten Scharnierflügels vorgesehenen Lochöffnungen können als Sacklöcher oder dergleichen Einformungen ausgebildet sein. Eine besonders einfache und deshalb bevorzugte Ausführungsform sieht demgegenüber vor, dass die Lochöffnungen als Durchtrittslöcher in der innenseitigen Materiallage des zumindest einen ersten Scharnierflügels ausgebildet sind.

Bevorzugt wird eine Ausführungsform, bei der die an der Außenseite des Scharniers vorstehenden Halteausformungen jeweils noppen- oder höckerförmig ausgebildet sind. Solche noppen- oder höckerförmigen Halteausformungen lassen sich besonders gut in den an der Innenseite eines benachbarten Scharniers vorgesehenen Lochöffnungen versenken.

Weiterbildungen gemäß der Erfindung ergeben sich aus der nachfolgenden Beschreibung eines bevorzugten Ausführungsbeispiels in Verbindung mit den Zeichnungen sowie der Beschreibung. Nachstehend wird die Erfindung anhand eines bevorzugten Ausführungsbeispiels noch näher beschrieben.

Es zeigt:
- Fig. 1: eine, mittels einem Gewindestab abgehängte und etwa in horizontaler Richtung orientierte Montageschiene, die über ein als Scharnier und hier als gerolltes Scharnier ausgebildetes Verbindungselement mit einer als Sicherungs- oder Querstrebe dienenden weiteren Montageschiene gelenkig verbunden ist, wobei diese Konstruktion hier in einer perspektivischen Schrägansicht von oben gezeigt ist,
- Figur 2: das als Scharnier ausgebildete Verbindungselement der in Figur 1 gezeigten Konstruktion in einer perspektivischen Schrägansicht von oben,
- Figur 3: das Verbindungselement aus den Figuren 1 und 2 in einer perspektivischen Schrägansicht von unten,
- Figur 4: das Verbindungselement aus den Figuren 1 bis 3 in einer rückseitigen Schrägansicht von oben,
- Figur 5: das Verbindungselement aus den Figuren 1 bis 4 in einer rückseitigen perspektivischen Unteransicht,
- Figur 6: eine mittels einem Gewindestab abgehängte und in etwa in horizontaler Richtung orientierte Montageschiene, die über zwei, paketartig aufeinanderliegende und hier um 90 Grad gedrehte Verbindungselemente gemäß den Figuren 1 bis 5 mit zwei weiteren, schräg angeordneten Montageschienen verbunden ist, die als Sicherungs- oder Querstreben dieser Konstruktion dienen,
- Figur 7: die in Figur 6 gezeigte Konstruktion in einer perspektivischen Draufsicht, und
- Figur 8: die in den Figuren 6 und 7 gezeigte Konstruktion in einer teilweise geschnitten dargestellten Seitenansicht.

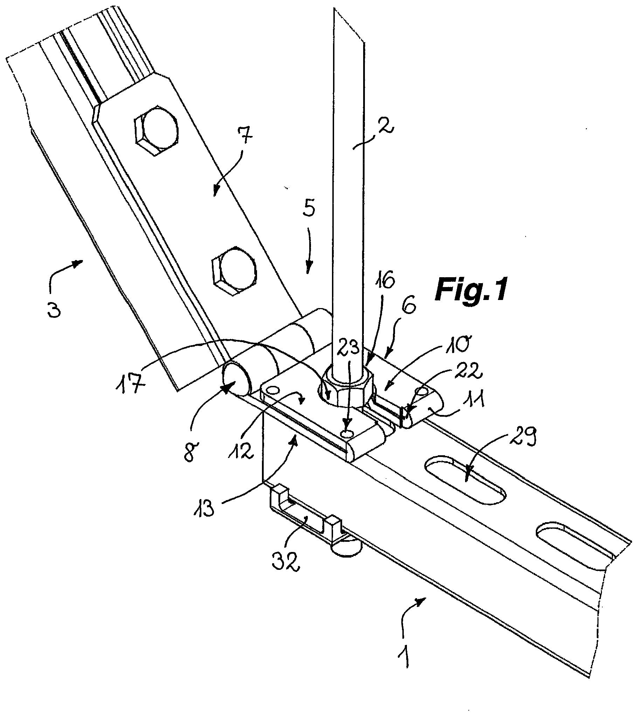

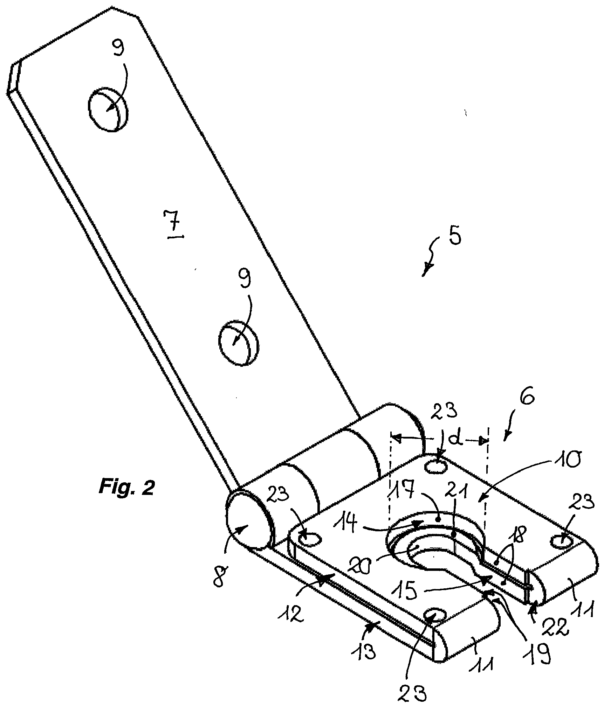

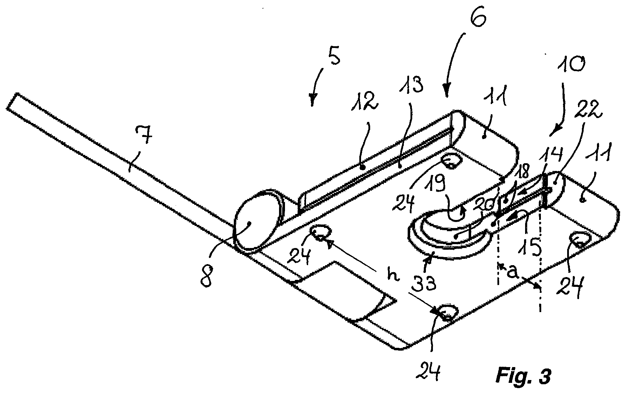

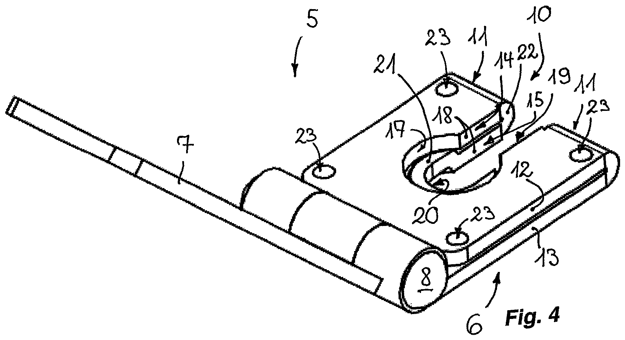

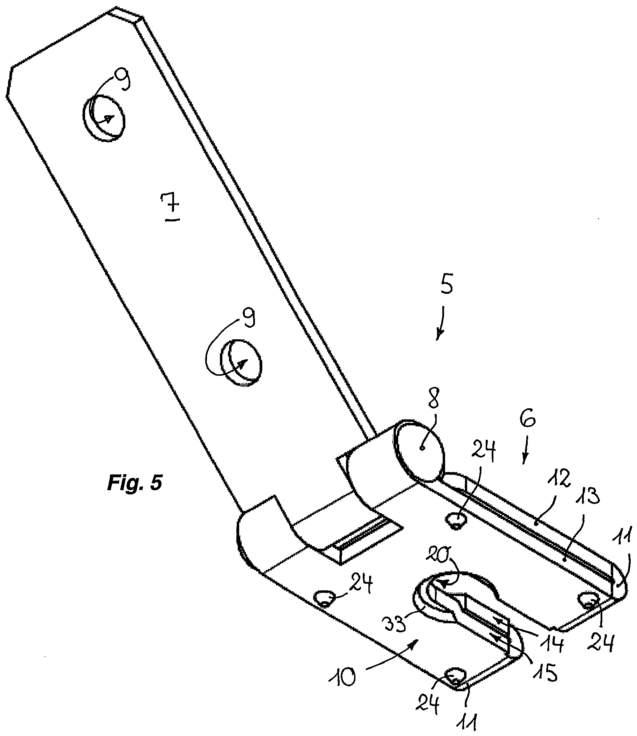

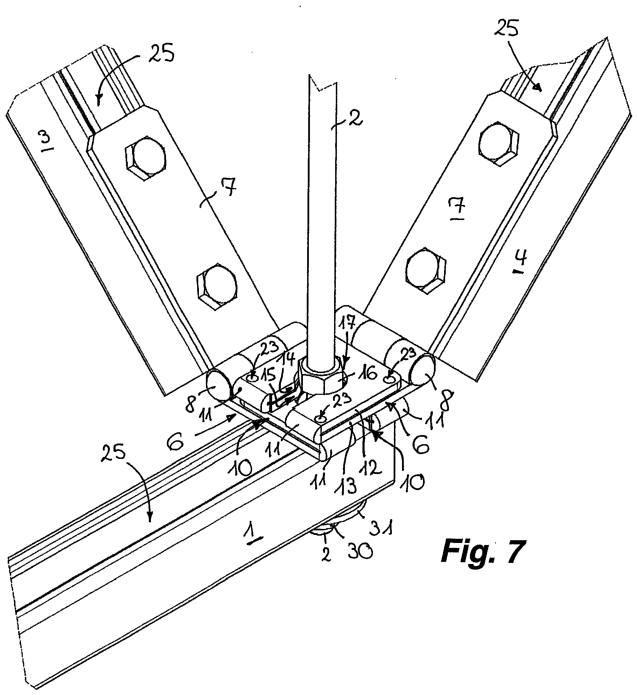

In den Figuren 1 und 6 bis 8 ist eine in etwa horizontaler Richtung orientierte Montageschiene 1 gezeigt, die mit Hilfe von Gewindestäben 2 abgehängt ist. Um die horizontal orientierte Montageschiene 1 gegen Erdbeben und dergleichen Erschütterungen absichern zu können, wird die Montageschiene 1 zumindest an ihrem einen, hier gezeigten Schienenende durch zumindest eine weitere Montageschiene 3 beziehungsweise 4 abgestützt, welche weiteren Montageschienen 3, 4 als Sicherungs- oder Querstreben dienen. Dabei ist die horizontal orientierte Montageschiene 1, an der eine hier nicht weiter gezeigte Rohrleitung mit Hilfe von Rohrschellen befestigt sein kann, mit den als Sicherungs- oder Querstreben dienenden Montageschienen 3, 4 über jeweils ein Verbindungselement verbunden, das in den Figuren 2 bis 5 näher dargestellt ist.

Das zum gelenkigen Verbinden der Montageschienen 1 und 3 beziehungsweise 1 und 4 bestimmte Verbindungselement ist als Scharnier und vorzugsweise als sogenanntes gerolltes Scharnier 5 ausgebildet, das zwei Scharnierflügel 6, 7 hat, die hier jeweils aus einem Material- und insbesondere einem Blechstreifen hergestellt sind. Die Scharnierflügel 6, 7 des Scharniers 5 sind über eine Schwenkachse unlösbar, aber gleichzeitig auch schwenkbar miteinander verbunden. Diese Schwenkachse kann als Kugel-Pfannen-Gelenkverbindung ausgebildet sein, - bei der hier dargestellten Ausführung ist diese Schwenkachse jedoch durch einen Stift 8 gebildet. Jede der Scharnierflügel 6, 7 weist zumindest eine Befestigungsöffnung 9, 10 zum Verbinden mit einer Schraube, einem Gewindestab 2 oder dergleichen Befestigungsmittel auf. Dabei ist die an dem ersten Scharnierflügel 6 vorgesehene Befestigungsöffnung 10 als randseitig offenes Langloch ausgebildet. Mit Hilfe dieses randseitig offenen Langloches kann der erste Scharnierflügel 6 des Scharniers 5 auch nachträglich noch auf den Gewindestab 2 aufgeschoben werden, mit dem die horizontal orientierte Montageschiene 1 beispielsweise von der Decke abgehängt ist, während der zweite Scharnierflügel 7 des Scharniers 5 mit einer weiteren zweiten Montageschiene 3 oder 4 verbunden werden kann, die zur Sicherung der horizontal orientierten Montageschiene 1 als Sicherungs- oder Querstrebe dient.

Aus den Figuren 2 bis 5 wird deutlich, dass der zumindest eine erste Scharnierflügel 6 des Scharniers 5 wenigstens in einem laschenförmigen flachen Teilbereich dieses Scharnierflügels 6 doppellagig ausgebildet und dazu aus zwei, durch eine Umbiegung 11 miteinander verbundene Materiallagen 12, 13 eines den ersten Scharnierflügel 6 bildenden Blech- oder dergleichen Materialstreifens gebildet ist. Dabei wird das im ersten Scharnierflügel 6 als Befestigungsöffnung vorgesehene Langloch 10 durch miteinander fluchtende randseitig offene Langlöcher 14, 15 in den den zumindest einen ersten Scharnierflügel 6 bildenden Materiallagen 12, 13 gebildet. Von diesen miteinander fluchtenden Langlöchern 14, 15 ist das in der, an der Innenseite des Scharniers gelegenen Materiallage des ersten Scharnierflügels 6 vorgesehene Langloch 14 schlüssellochförmig ausgebildet. In dem kreissegmentförmigen Teilbereich dieses schlüssellochförmigen Langloches 14 kann beispielsweise eine Schraubenmutter 16 gesichert versenkt werden, die auf den Gewindestab 2 aufgeschraubt ist, der das an dem ersten Gewerbe 6 des Scharniers 5 vorgesehene Langloch 10 durchsetzt. Da das als Scharnier 5 ausgebildete Verbindungselement einstückig ausgestaltet ist und keine zusätzliche, komplex ausgebildete Sicherungsplatte benötigt, ist dieses Verbindungselement mit geringem Aufwand herstellbar und einfach in der Handhabung und Montage.

Da das schlüsselförmige Langloch 14, das in der auf der Innenseite des Scharniers 5 angeordneten Materiallage 12 des ersten Scharnierflügels 6 vorgesehen ist, an seinem geschlossenen Lochende eine kreissegmentförmige Erweiterung 17 des lichten Lochquerschnitts aufweist, kann in dieser kreissegmentförmigen Erweiterung 17 die auf den Gewindestab 2 aufgeschraubte Schraubenmutter 16 positionsgesichert eintauchen, ohne das ein Herausrutschen des Gewindestabes 2 aus dem Langloch 10 des ersten Scharnierflügels 6, beispielsweise bei erschütterungsbedingten Querbelastungen, befürchtet werden muss.

Um das Scharnier 5 auf den die Montageschiene 1 abhängenden Gewindestab 2 auch nachträglich noch aufschieben zu können, weisen die in den beiden Materiallagen 12, 13 des ersten Scharnierflügels 6 vorgesehenen Langlöcher 14, 15 parallel orientierte Lochseiten 18, 19 auf, deren Abstand a größer ist als der Gewinde-Nenndurchmesser n des in diese Langlöcher 14, 15 einschiebbaren Gewindestabes 2.

Die kreissegmentförmige Erweiterung 17 des in der innenseitigen Materiallage 12 vorgesehenen Langloches 14 hat einen Durchmesser d, der größer ist als das Eckenmaß e der auf dem Gewindestab 2 aufgeschraubten Schraubenmutter 16.

Demgegenüber sind die zueinander parallelen Längsseiten 18, 19 des in der außenliegenden Materiallage 13 des ersten Scharnierflügels 6 vorgesehenen Langloches 15 an dessen geschlossenem Lochende durch einen Halbkreis 20 abgeschlossen, dessen Durchmesser dem Abstand a der parallelen Lochseiten 18, 19 entspricht. Dadurch steht der das Langloch 15 in der außenliegenden Materiallage 13 im Bereich des Lochendes umgrenzende Umfangsrandbereich über den die kreissegmentförmige Erweiterung 17 in der innenliegenden Materiallage 12 des ersten Scharnierflügels 6 umgrenzenden Umfangsrandbereich vor und bildet eine Auflage 21 für die auf dem Gewindestab 2 aufgeschraubte Schraubenmutter 16.

In den Figuren 2 bis 5 ist erkennbar, dass die die Materiallagen 12, 13 miteinander verbindende Umbiegung 11 an dem dem Stift 8 abgewandten Rand des ersten Scharnierflügels 6 angeordnet ist. Dabei sind das im ersten Scharnierflügel 6 vorgesehene Langloch 10 und die dazu in dessen Materiallagen 12, 13 vorgesehenen, miteinander fluchtenden Langlöcher 14, 15 zu dem durch die Umbiegung 11 gebildeten Rand des ersten Scharnierflügels 6 hin offen ausgebildet.

In den Figuren 2 bis 5 ist auch gut erkennbar, dass der das Lochende des in der außenliegenden Materiallage 13 vorgesehenen Langloches 15 bildende Halbkreis 20 und die kreissegmentförmige Erweiterung 17 des in der innenliegenden Materiallage 12 vorgesehenen Langloches 14 konzentrisch zueinander angeordnet sind.

Aus den Figuren 2 bis 5 wird deutlich, dass die parallelen Lochseiten 18, 19 zum randseitig offenen Lochende des Langloches 10 hin in einer erweiterten Einfädel- oder Lochöffnung 22 auslaufen.

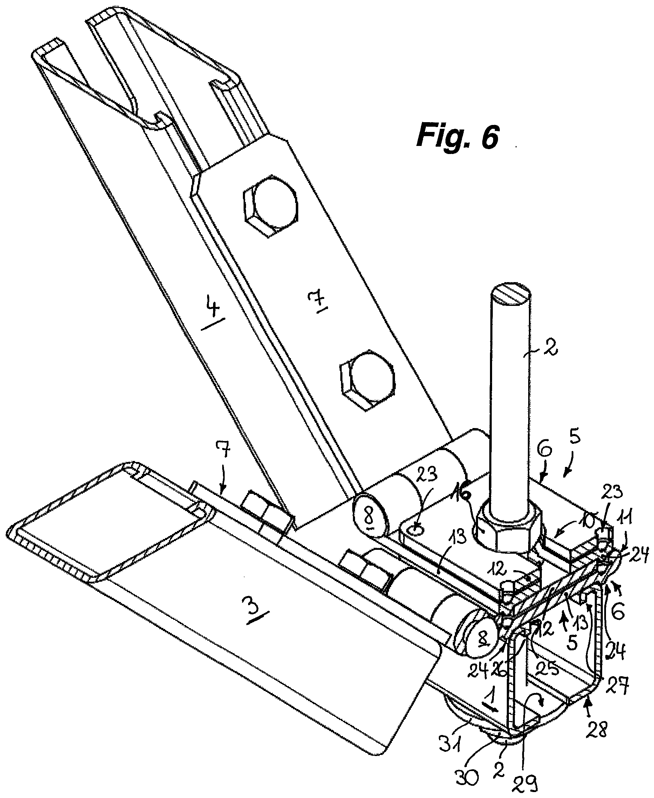

In dem in den Figuren 6 bis 8 gezeigten Ausführungsbeispiel ist dargestellt, dass die horizontal orientierte Montageschiene 1 auch mit mindestens zwei weiteren, als Sicherungs- oder Querstäbe dienenden Montageschienen 3, 4 abgestützt werden kann. Um die horizontal orientierte Montageschiene 1 dazu mit den Montageschienen 3, 4 verbinden zu können, werden zumindest zwei der als Verbindungselemente dienenden Scharniere 5 paketartig mit ihren ersten Scharnierflügeln 6 übereinandergelegt, wobei die Scharniere 5 in dem in Figur 6 bis 8 gezeigten Ausführungsbeispiel um 90 Grad verdreht zueinander angeordnet sind und sich somit mit ihren durch die Stifte 8 gebildeten Schwenkachsen nicht behindern können. Um diese paketweise übereinanderliegenden Scharniere 5 in ihrer zueinander gedrehten Position sichern zu können, sind an der Innenseite der Scharniere 5 vier voneinander beabstandete und im Rechteck zueinander angeordnete Lochöffnungen 23 vorgesehenen. Diese Lochöffnungen 23 werden hier durch Durchtrittslöcher gebildet, welche die innenseitige Materiallage 12 durchsetzen. Die Lochöffnungen 23 sind hier in einem Quadrat zueinander angeordnet und fluchten jeweils mit einer Halteausformung 24, welche Halteausformungen 24 auf der Außenseite der Scharniere 5 gelegenen Flachseite des zumindest einen ersten Scharnierflügels 6 angeordnet sind. Dabei greifen die Halteausformungen 24 am ersten Scharnierflügel 6 des oben liegenden Scharniers 5 in die Lochöffnungen 23 am ersten Scharnierflügel 6 des jeweils untenliegenden benachbarten Scharniers 5 ein. Die Halteausformungen 24 sind dazu in ihrem Querschnitt so bemessen, dass sie in die Lochöffnungen 23 eines an dem ersten Scharnierflügels 6 des obenliegenden Scharniers 5 anliegenden und hier um 90 Grad oder auch um 180 Grad gedrehten baugleichen zweiten untenliegenden Verbindungselements 5 eintauchen können. Die Halteausformungen 24 sind dazu noppen- oder höckerförmig ausgebildet.

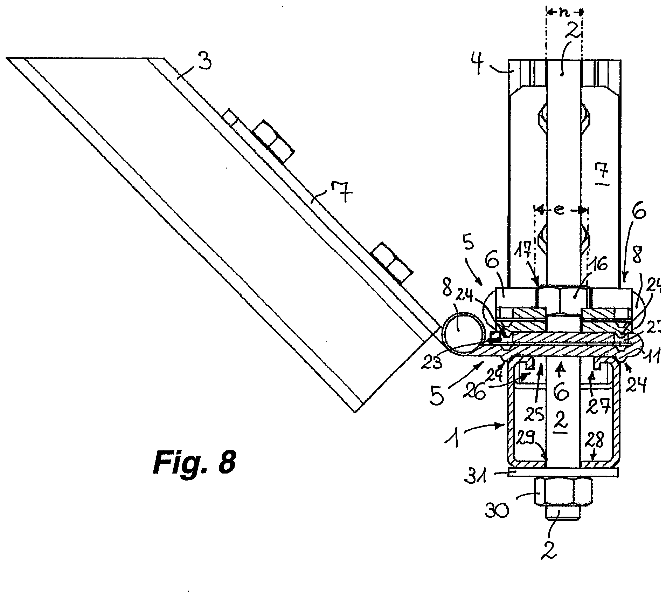

In den Figuren 6 und 8 ist besonders gut erkennbar, dass die horizontal orientierte Montageschiene 1 und die als Sicherungs- oder Querstreben dienenden Montageschienen 3, 4 vorzugsweise baugleich ausgebildet sind. Die Montageschienen 1, 3 und 4 weisen hier einen C- oder U-förmigen Querschnitt auf, wobei die Montageschiene 1, 3, 4 an ihren eine Schienenöffnung 25 begrenzenden Schienen-Längsrändern 26, 27 nach innen, zum Schienen-Inneren hin, eingezogen sind. An der der Schienenöffnung 25 abgewandten Schienen-Längsseite 28 weisen die Montageschienen 1, 3, 4 eine Vielzahl voneinander beabstandeter Durchtrittsöffnungen 29 auf. Der zur Abhängung der Montageschiene 1 bestimmte, zumindest eine Gewindestab 2 kann somit die Schienenöffnung 25 sowie eine der an der gegenüberliegenden Schienen-Längsseite 28 vorgesehenen Durchtrittsöffnungen 29 durchsetzen, wobei die Montageschiene 1 zwischen der Schraubenmutter 16 und einer weiteren Schraubenmutter 30 eingespannt ist, welche die Schienen-Längsseite 28, gegebenenfalls unter Zuhilfenahme einer Unterlegscheibe 31 oder einer Halteklammer 32, welche außenseitig an den Schienen-Längsrändern 26, 27 angreift, beaufschlagt.

In den Figuren 6 und 8 ist erkennbar, dass der Abstand h der Halteausformungen 24 so bemessen ist, dass diese Halteausformungen 24 an den Schienen-Längsrändern 26, 27 der Montageschiene 1 jeweils paarweise anliegen. Der Scharnierflügel 6 der Scharniere 5 weist eine außenliegende Einsenkung 33 auf, die in die außenliegende Materiallage eingeformt ist und in den Halbkreis 20 des Langloches 15 übergeht.

### Bezugszeichenliste

- 1: horizontal orientierte Montageschiene
- 2: Gewindestab
- 3: als Querstrebe dienende Montageschiene
- 4: als Querstrebe dienende Montageschiene (gemäß den Figuren 6 bis 8)
- 5: Scharnier
- 6: erster Scharnierflügel
- 7: zweiter Scharnierflügel
- 8: Stift
- 9: runde Befestigungsöffnung
- 10: als Befestigungsöffnung dienendes Langloch im ersten Scharnierflügel 6 des Scharniers 5
- 11: Umbiegung
- 12: innenliegende Materiallage
- 13: außenliegende Materiallage
- 14: Langloch in der innenliegenden Materiallage
- 15: Langloch in der außenliegenden Materiallage
- 16: Schraubenmutter
- 17: kreissegmentförmige Erweiterung
- 18: Lochseite
- 19: Lochseite
- 20: Halbkreis
- 21: Auflage
- 22: Einfädelöffnung
- 23: Lochöffnung
- 24: Halteausformung
- 25: Schienenöffnung
- 26: Schienen-Längsrand
- 27: Schienen-Längsrand
- 28: Schienen-Längsseite
- 29: Durchtrittsöffnung
- 30: Schraubenmutter
- 31: Unterlegscheibe
- 32: Halteklammer
- 33: Einsenkung

## Patentansprüche

1. Verbindungselement zum gelenkigen Verbinden von zumindest einer Montageschiene mit einem Bauteil oder -werk, insbesondere von zwei Montageschienen, das als Scharnier (5) mit zwei Scharnierflügeln (6, 7) ausgebildet ist, die (6, 7) schwenkbar miteinander verbunden sind, und die (6, 7) jeweils wenigstens eine Befestigungsöffnung (9, 10) zum Verbinden mit einer Schraube, einem Gewindestab (2) oder dergleichen Befestigungsmittel aufweisen, wobei zumindest ein erster Scharnierflügel (6) wenigstens eine als randseitig offenes Langloch ausgebildete Befestigungsöffnung (10) hat, wobei zumindest der erste Scharnierflügel (6) des Scharniers (5) doppellagig ausgestaltet und aus zwei, durch eine Umbiegung (11) miteinander verbundene Materiallagen (13) eines Materialstreifens gebildet ist, und wobei die wenigstens eine als Langloch ausgebildete Befestigungsöffnung (10) des ersten Scharnierflügels (6) durch miteinander fluchtende, randseitig offene Langlöcher (14, 15) in den den zumindest einen ersten Scharnierflügel (6) bildenden Materiallagen (12, 13) gebildet ist, **dadurch gekennzeichnet, dass** die auf der Innenseite des Scharniers (5) angeordnete Materiallage (12) des zumindest einen ersten Scharnierflügels (6) ein schlüssellochförmiges Langloch (14) trägt, dass der das Langloch (15) in der außenliegenden Materiallage (13) im Bereich des Lochendes umgrenzende Umfangsrandbereich über den eine kreissegmentförmige Erweiterung (17) in der innenliegenden Materiallage (12) des zumindest einen ersten Scharnierflügels (6) umgrenzenden Umfangsrandbereich vorsteht und eine Auflage (21) für eine auf den Gewindestab aufgeschraubte Schraubenmutter (16) oder einen Schraubenkopf bildet, und dass die in den Materiallagen (12, 13) des zumindest einen ersten Scharnierflügels (6) vorgesehenen, miteinander fluchtenden Langlöcher zu dem durch die Umbiegung gebildeten Rand des ersten Scharnierflügels (6) hin offen ausgebildet sind.

2. Verbindungselement nach Anspruch 1, **dadurch gekennzeichnet, dass** das schlüssellochförmige Langloch (14) in der auf der Innenseite des Scharniers (5) angeordneten Materiallage (12) des zumindest einen ersten Scharnierflügels (6) an seinem geschlossenen Lochende die eine kreissegmentförmige Erweiterung (17) des Lochquerschnitts aufweist.

3. Verbindungselement nach Anspruch 1 oder 2, **dadurch gekennzeichnet, dass** die in den Materiallagen (12, 13) vorgesehenen Langlöcher (14, 15) parallel orientierte Lochseiten (18, 19) haben, deren Abstand (a) größer ist als der Gewinde-Nenndurchmesser (n) einer in diese Langlöcher (14, 15) einschiebbaren Schraube oder eines Gewindestabes (2).

4. Verbindungselement nach Anspruch 2 oder 3, **dadurch gekennzeichnet, dass** die kreissegmentförmige Erweiterung (17) des Langloches (14) einen Durchmesser (d) hat, der größer ist als das Eckenmaß (e) eines Schraubenkopfes der Schraube oder einer auf dem Gewindestab (2) aufgeschraubten Schraubenmutter (16).

5. Verbindungselement nach einem der Ansprüche 1 bis 4, **dadurch gekennzeichnet, dass** die auf der Außenseite des Scharniers (5) angeordnete Materiallage (13) des ersten Scharnierflügels (6) das Langloch (15) aufweist, dessen parallel zueinander orientierten Lochseiten (18, 19) an einem geschlossenen Lochende durch einen Halbkreis (20) abgeschlossen sind, dessen Durchmesser dem Abstand (a) der parallelen Lochseiten (18, 19) entspricht.

6. Verbindungselement nach einem der Ansprüche 1 bis 5, **dadurch gekennzeichnet, dass** der das Langloch (15) in der auf der Außenseite des Scharniers (5) angeordneten Materiallage (13) im Bereich des Lochendes umgrenzende Umfangsrandbereich über den die kreissegmentförmige Erweiterung (17) umgrenzenden Umfangsrandbereich in der auf der Innenseite des Scharniers (5) vorgesehenen Materiallage (12) des zumindest einen ersten Scharnierflügels (6) vorsteht.

7. Verbindungselement nach Anspruch 6, **dadurch gekennzeichnet, dass** der vorstehende Randbereich als Auflage (21) für den Schraubenkopf der Schraube oder die auf dem Gewindestab (2) aufgeschraubte Schraubenmutter (16) ausgebildet ist.

8. Verbindungselement nach einem der Ansprüche 1 bis 7, **dadurch gekennzeichnet, dass** die die Materiallagen (12, 13) miteinander verbindende Umbiegung (11) an dem der Schwenkachse abgewandten Rand des ersten Scharnierflügels (6) angeordnet ist.

9. Verbindungselement nach einem der Ansprüche 1 bis 8, **dadurch gekennzeichnet, dass** die im ersten Scharnierflügel (6) vorgesehene Befestigungsöffnung (10) und die dazu in dessen Materiallagen (12, 13) vorgesehenen, miteinander fluchtenden Langlöcher (14, 15) zu dem durch die Umbiegung (11) gebildeten Rand des ersten Scharnierflügels (6) hin offen ausgebildet sind.

10. Verbindungselement nach einem der Ansprüche 1 bis 9, **dadurch gekennzeichnet, dass** der das Lochende des in der außenliegenden Materiallage (13) vorgesehenen Langloches (15) bildende Halbkreis (20) und die kreissegmentförmige Erweiterung (17) des in der innenliegenden Materiallage (12) des zumindest einen ersten Scharnierflügels (6) vorgesehenen Langloches (14) konzentrisch zueinander angeordnet sind.

11. Verbindungselement nach einem der Ansprüche 1 bis 10, **dadurch gekennzeichnet, dass** der zumindest eine Scharnierflügel (6) vier voneinander beabstandete und im Rechteck zueinander angeordnete Lochöffnungen (23) trägt, die zur Innenseite des Scharniers (5) hin offen ausgebildet sind, dass die Lochöffnungen (23) in einem Quadrat zueinander angeordnet sind und jeweils mit einer Halteausformung (24) fluchten, welche Halteausformungen (24) auf der Außenseite des Scharniers (5) gelegenen Flachseite des zumindest einen ersten Scharnierflügels (6) angeordnet sind, dass der Abstand (h) der Halteausformungen (24) so bemessen ist, dass diese Halteausformungen (24) an den eine die Flachseite des zumindest einen ersten Scharnierflügels (6) beaufschlagenden Schienenlängsseite begrenzenden Schienen-Längsrändern (26, 27) einer Montageschiene (1) jeweils paarweise anliegen, und dass die Halteausformungen (24) in ihrem Querschnitt so bemessen sind, dass sie in die Lochöffnungen (23) eines an dem ersten Scharnierflügel (6) des ersten Verbindungselements anliegenden und um 90 Grad oder 180 Grad gedrehten baugleichen zweiten Verbindungselements eintauchen.

12. Verbindungselement nach Anspruch 11, **dadurch gekennzeichnet, dass** die Lochöffnungen (23) als Durchtrittslöcher in der innenseitigen Materiallage (12) des zumindest einen ersten Scharnierflügels (6) ausgebildet sind.

13. Verbindungselement nach Anspruch 11 oder 12, **dadurch gekennzeichnet, dass** die Halteausformungen (24) noppen- oder höckerförmig ausgebildet sind.

14. Verbindungselement nach einem der Ansprüche 1 bis 13, **dadurch gekennzeichnet, dass** das Verbindungselement als gerolltes Scharnier ausgebildet ist.

15. Verbindungselement nach einem der Ansprüche 1 bis 14, **dadurch gekennzeichnet, dass** die Scharnierflügel (6, 7) des als Scharnier (5) ausgebildeten Verbindungselements über einen Stift (8) oder über eine Kugel-Pfannen-Gelenkverbindung schwenkbar miteinander verbunden sind.

16. Verbindungselement nach einem der Ansprüche 1 bis 15, **dadurch gekennzeichnet, dass** die durch eine Umbiegung (11) miteinander verbundenen Materiallagen (12, 13) des zumindest einen ersten Scharnierflügels (6) des Scharniers (5) mit ihren einander zugewandten Flachseiten aneinander anliegen.

## Claims

1. Connecting element for the articulated connection of at least one mounting rail to a component or structure, in particular of two mounting rails, which takes the form of a hinge (5) with two hinge wings (6, 7), which hinge rings (6, 7) are pivotably connected to one another, and which hinge rings (6, 7) each have at least one fastening opening (9, 10) for connection to a screw, a threaded rod (2) or equivalent fastening means, wherein at least one first hinge ring (6) has at least one fastening opening (10) which takes the form of an open-edge oblong hole, wherein at least the first hinge ring (6) of the hinge (5) is of double-layered design and is formed from two material layers (13) of a material strip which are connected to one another by a bend (11), and wherein the at least one fastening opening (10), in the form of an oblong hole, of the first hinge ring (6) is formed by mutually aligned, open-edge oblong holes (14, 15) in the material layers (12, 13) forming the at least one first hinge ring (6), **characterized in that** the material layer (12), which is arranged on the inner side of the hinge (5), of the at least one first hinge ring (6) bears a keyhole-shaped oblong hole (14), **in that** the circumferential edge region which bounds the oblong hole (15) in the outer material layer (13) in a region of the hole end projects beyond the circumferential edge region which bounds a circular segment-shaped widening (17) in the inner material layer (12) of the at least one first hinge ring (6) and forms a support (21) for a screw nut (16) screwed on the threaded rod or for a screw head, and **in that** the mutually aligned oblong holes provided in the material layers (12, 13) of the at least one first hinge ring (6) are designed to be open towards the edge of the first hinge ring (6) that is formed by the bend.

2. Connecting element according to Claim 1, **characterized in that** the keyhole-shaped oblong hole (14) in the material layer (12), which is arranged on the inner side of the hinge (5), of the at least one first hinge ring (6) has, at its closed hole end, the circular segment-shaped widening (17) of the hole cross section.

3. Connecting element according to Claim 1 or 2, **characterized in that** the oblong holes (14, 15) provided in the material layers (12, 13) have hole sides (18, 19) which are oriented in parallel and whose spacing (a) is greater than the nominal thread diameter (n) of a screw or of a threaded rod (2) that can be inserted into these oblong holes (14, 15).

4. Connecting element according to Claim 2 or 3, **characterized in that** the circular segment-shaped widening (17) of the oblong hole (14) has a diameter (d) which is greater than the corner dimension (e) of a screw head of the screw or of a screw nut (16) screwed on the threaded rod (2).

5. Connecting element according to one of Claims 1 to 4, **characterized in that** the material layer (13), which is arranged on the outer side of the hinge (5), of the first hinge ring (6) has the oblong hole (15) whose hole sides (18, 19) oriented parallel to one another are closed off at a closed hole end by a semicircle (20) whose diameter corresponds to the spacing (a) of the parallel hole sides (18, 19).

6. Connecting element according to one of Claims 1 to 5, **characterized in that** the circumferential edge region which bounds the oblong hole (15) in the material layer (13), which is arranged on the outer side of the hinge (5), in the region of the hole end projects beyond the circumferential edge region, which bounds the circular segment-shaped widening (17), in material layer (12), which is provided on the inner side of the hinge (5), of the at least one first hinge ring (6).

7. Connecting element according to Claim 6, **characterized in that** the projecting edge region takes the form of a support (21) for the screw head of the screw or for the screw nut (16) screwed on the threaded rod (2).

8. Connecting element according to one of Claims 1 to 7, **characterized in that** the bend (11) connecting the material layers (12, 13) to one another is arranged at the edge of the first hinge ring (6) that faces away from the pivot axis.

9. Connecting element according to one of Claims 1 to 8, **characterized in that** the fastening opening (10) provided in the first hinge ring (6) and the mutually aligned oblong holes (14, 15) provided therefor in its material layers (12, 13) are designed to be open toward the edge of the first hinge ring (6) that is formed by the bend (11).

10. Connecting element according to one of Claims 1 to 9, **characterized in that** the semicircle (20), which forms the hole end of the oblong hole (15) provided in the outer material layer (13), and the circular segment-shaped widening (17) of the oblong hole (14), which is provided in the inner material layer (12) of the at least one first hinge ring (6), are arranged concentrically to one another.

11. Connecting element according to one of Claims 1 to 10, **characterized in that** the at least one hinge ring (6) bears four spaced-apart hole openings (23) which are arranged relative to one another in a right angle and which are designed to be open towards the inner side of the hinge (5), **in that** the hole openings (23) are arranged relative to one another in a square and are each aligned with a holding formation (24), which holding formations (24) are arranged on the flat side, which is situated on the outer side of the hinge (5), of the at least one first hinge ring (6), **in that** the spacing (h) of the holding formations (24) is dimensioned such that these holding formations (24) each bear in pairs against the rail longitudinal edges (26, 27) of a mounting rail (1) which delimit a rail longitudinal side which acts on the flat side of the at least one first hinge ring (6), and **in that** the holding formations (24) are dimensioned in their cross section such that they engage in the hole openings (23) of a structurally identical second connecting element which bears against the first hinge ring (6) of the first connecting element and which is rotated through 90 degrees or 180 degrees.

12. Connecting element according to Claim 11, **characterized in that** the hole openings (23) take the form of passage openings in the inner material layer (12) of the at least one first hinge ring (6).

13. Connecting element according to Claim 11 or 12, **characterized in that** the holding formations (24) take the form of nubs or humps.

14. Connecting element according to one of Claims 1 to 13, **characterized in that** the connecting element takes the form of a rolled hinge.

15. Connecting element according to one of Claims 1 to 14, **characterized in that** the hinge rings (6, 7) of the connecting element designed as a hinge (5) are pivotably connected to one another via a pin (8) or via a ball and socket joint connection.

16. Connecting element according to one of Claims 1 to 15, **characterized in that** the material layers (12, 13), which are connected to one another by a bend (11), of the at least one first hinge ring (6) of the hinge (5) bear against one another by way of their mutually facing flat sides.

## Revendications

1. Elément de raccordement pour le raccordement articulé d'au moins un rail de montage avec une pièce ou une construction, en particulier de deux rails de montage, qui est réalisé sous la forme d'une charnière (5) comportant deux ailes de charnière (6, 7), qui sont reliées l'une à l'autre de façon pivotante, et qui (6, 7) présentent respectivement au moins une ouverture de fixation (9, 10) pour l'assemblage à l'aide d'une vis, d'une tige filetée (2) ou d'un moyen de fixation similaire, dans lequel au moins une première aile de charnière (6) comporte au moins une ouverture de fixation (10) réalisée sous la forme d'un trou allongé ouvert du côté du bord, dans lequel au moins la première aile de charnière (6) de la charnière (5) est réalisée à double couche et est constituée de deux couches de matière (13) d'une bande de matière reliées l'une à l'autre par une zone cintrée (11), et dans lequel ladite au moins une ouverture de fixation (10) de la première aile de charnière (6) réalisée sous la forme d'un trou allongé est formée par des trous allongés (14, 15) alignés l'un avec l'autre ouverts du côté du bord, dans les couches de matière (12, 13) formant ladite au moins une première aile de charnière (6), **caractérisé en ce que** la couche de matière (12) de ladite au moins une première aile de charnière (6), disposée sur le côté intérieur de la charnière (5), comporte un trou allongé en forme de trou de serrure (14), **en ce que** la région de bord périphérique qui entoure le trou allongé (15) dans la couche de matière placée à l'extérieur (13) dans la région de l'extrémité de trou est saillante au-delà de la région de bord périphérique qui entoure un élargissement (17) en forme de segment de cercle dans la couche de matière placée à l'intérieur (12) de ladite au moins une première aile de charnière (6) et forme un appui (21) pour un écrou fileté (16) vissé sur la tige filetée, ou forme une tête d'écrou, et **en ce que** les trous allongés alignés l'un avec l'autre, prévus dans les couches de matière (12, 13) de ladite au moins une première aile de charnière (6), sont réalisés sous forme ouverte vers le bord de la première aile de charnière (6) formé par la région cintrée.

2. Elément de raccordement selon la revendication 1, **caractérisé en ce que** le trou allongé en forme de trou de serrure (14), dans la couche de matière (12) de ladite au moins une première aile de charnière (6) placée sur le côté intérieur de la charnière (5), présente à son extrémité de trou fermée l'élargissement (17) en forme de segment de cercle de la section transversale de trou.

3. Elément de raccordement selon la revendication 1 ou 2, **caractérisé en ce que** les trous allongés (14, 15) prévus dans les couches de matière (12, 13) présentent des côtés de trou (18, 19) orientés parallèlement, dont la distance (a) est plus grande que le diamètre nominal de filet (n) d'une vis insérable dans ces trous allongés (14, 15) ou d'une tige filetée (2).

4. Elément de raccordement selon la revendication 2 ou 3, **caractérisé en ce que** l'élargissement en forme de segment de cercle (17) du trou allongé (14) présente un diamètre (d), qui est plus grand que la diagonale (e) d'une tête de vis de la vis ou d'un écrou fileté (16) vissé sur la tige filetée (2).

5. Elément de raccordement selon l'une quelconque des revendications 1 à 4, **caractérisé en ce que** la couche de matière (13) de la première aile de charnière (6) placée sur le côté extérieur de la charnière (5) comporte le trou allongé (15), dont les côtés de trou (18, 19) orientés parallèlement l'un à l'autre se terminent au niveau d'une extrémité de trou fermée par un demi-cercle (20), dont le diamètre correspond à la distance (a) des côtés de trou parallèles (18, 19).

6. Elément de raccordement selon l'une quelconque des revendications 1 à 5, **caractérisé en ce que** la région de bord périphérique qui entoure le trou allongé (15) dans la couche de matière (13) placée sur le côté extérieur de la charnière (5) dans la région de l'extrémité de trou est saillante au-delà de la région de bord périphérique qui entoure l'élargissement (17) en forme de segment de cercle dans la couche de matière (12) de ladite au moins une première aile de charnière (6) prévue sur le côté intérieur de la charnière (5).

7. Elément de raccordement selon la revendication 6, **caractérisé en ce que** la région de bord en saillie est réalisée sous la forme d'un appui (21) pour la tête de vis de la vis ou pour l'écrou fileté (16) vissé sur la tige filetée (2).

8. Elément de raccordement selon l'une quelconque des revendications 1 à 7, **caractérisé en ce que** la zone cintrée (11) qui relie l'une à l'autre les couches de matière (12, 13) est disposée sur le bord de la première aile de charnière (6) situé à l'opposé de l'axe de pivotement.

9. Elément de raccordement selon l'une quelconque des revendications 1 à 8, **caractérisé en ce que** l'ouverture de fixation (10) prévue dans la première aile de charnière (6) et les trous allongés (14, 15) alignés l'un avec l'autre prévus à cet effet dans les couches de matière (12, 13) sont réalisés sous forme ouverte vers le bord de la première aile de charnière (6) formé par la zone cintrée (11).

10. Elément de raccordement selon l'une quelconque des revendications 1 à 9, **caractérisé en ce que** le demi-cercle (20) qui forme l'extrémité de trou du trou allongé (15) prévu dans la couche de matière placée à l'extérieur (13) et l'élargissement (17) en forme de segment de cercle du trou allongé (14) prévu dans la couche de matière placée à l'intérieur (12) de ladite au moins une première aile de charnière (6) sont disposés de façon concentrique l'un par rapport à l'autre.

11. Elément de raccordement selon l'une quelconque des revendications 1 à 10, **caractérisé en ce que** ladite au moins une aile de charnière (6) comporte quatre ouvertures de trou (23) espacées les unes des autres et disposées en rectangle les unes par rapport aux autres, qui sont réalisées sous forme ouverte vers le côté intérieur de la charnière (5), **en ce que** les ouvertures de trou (23) sont disposées en un carré les unes par rapport aux autres et sont chaque fois alignées avec une bosse de retenue (24), ces bosses de retenue (24) étant disposées sur le côté plat de ladite au moins une première aile de charnière (6) situé sur le côté extérieur de la charnière (5), **en ce que** la distance (h) des bosses de retenue (24) est dimensionnée de telle manière que ces bosses de retenue (24) s'appliquent chaque fois par paires sur les bords longitudinaux de rail (26, 27) d'un rail de montage (1) limitant un côté longitudinal de rail qui vient en contact avec le côté plat de ladite au moins une première aile de charnière (6), et **en ce que** les bosses de retenue (24) sont dimensionnées en section transversale de telle manière qu'elles plongent dans les ouvertures de trou (23) d'un deuxième élément de raccordement de même structure appliqué sur la première aile de charnière (6) du premier élément de raccordement et tourné de 90 degrés ou de 180 degrés.

12. Elément de raccordement selon la revendication 11, **caractérisé en ce que** les ouvertures de trou (23) sont réalisées sous la forme de trous de passage dans la couche de matière (12) placée du côté intérieur de ladite au moins une première aile de charnière (6).

13. Elément de raccordement selon la revendication 11 ou 12, **caractérisé en ce que** les bosses de retenue (24) sont réalisées en forme de boutons ou de tétons.

14. Elément de raccordement selon l'une quelconque des revendications 1 à 13, **caractérisé en ce que** l'élément de raccordement est réalisé sous la forme d'une charnière roulée.

15. Elément de raccordement selon l'une quelconque des revendications 1 à 14, **caractérisé en ce que** les ailes de charnière (6, 7) d'un élément de raccordement réalisé sous forme de charnière (5) sont assemblées l'une à l'autre de façon pivotante à l'aide d'une fiche (8) ou à l'aide d'une liaison articulée à rotule et cuvette.

16. Elément de raccordement selon l'une quelconque des revendications 1 à 15, **caractérisé en ce que** les couches de matière (12, 13) de ladite au moins une première aile de charnière (6) de la charnière (5) reliées l'une à l'autre par une zone cintrée (11) s'appliquent l'une contre l'autre avec leurs côtés plats tournés l'un vers l'autre.
